# EUROPEAN PATENT SPECIFICATION

(11) **EP 3 782 943 B1**
(45) Date of publication and mention of the grant of the patent: **22.02.2023**
(21) Application number: 19192521.3
(22) Date of filing: 20.08.2019
(51) Int. Cl.: B66B 1/34, B66B 19/00

(54) **METHOD OF COMMISSIONING A CONVEYOR SYSTEM**
VERFAHREN ZUR INBETRIEBNAHME EINES FÖRDERSYSTEMS
PROCÉDÉ DE MISE EN SERVICE D'UN SYSTÈME DE CONVOYEUR

(43) Date of publication of application: 24.02.2021
(73) Proprietor: KONE Corporation, 00330 Helsinki (FI)
(72) Inventor: PANULA, Juha, 00330 HELSINKI (FI); RUUSKANEN, Mikko, 00330 HELSINKI (FI)
(74) Representative: Berggren Oy

(56) References cited:
- EP-A1- 2 602 929
- WO-A1-2017/085238
- WO-A1-2017/220678

## Description

### TECHNICAL FIELD

The invention relates to a method of commissioning a conveyor system, such as an elevator system, an escalator system and/or a moving walk system.

### BACKGROUND

Movement of the conveyor system is controlled by a drive unit, which can be for example a frequency converter. Drive unit is configured to supply electrical power to the electrical motor of the conveyor drive from a power supply, such as mains. Configuration of a conveyor drive is an important part of a conveyor system installation so that the system operates in a correct manner. The conveyor system can be e.g. an elevator system, an escalator system and/or a moving walk system.

In elevator environment, the elevator has hoisting ropes coupled to an elevator car and to a counterweight. Elevator car is driven by a hoisting machinery. Hoisting machinery has a traction sheave engaged with the hoisting ropes. When traction sheave is rotated, elevator car moves by the movement of the hoisting ropes. Hoisting machinery has an electrical motor to rotate the traction sheave. Hoisting machinery also has normally two holding brakes, operable to stop and hold an idle elevator car standstill in elevator shaft.

In elevator environment, the elevator drive controls power supply to an electrical motor and brakes of the elevator and thus affects the lifting regarding, for example, acceleration, deceleration, speed and height lifted or lowered. To provide smooth drive of an elevator car, drive unit calculates required torque of the electrical motor. Drive unit supplies selected amount of current to the motor in accordance with the torque requirements. Calculated motor torque / current is a function of several mechanical and electrical parameters, such as suspension ratio of the elevator car, traction sheave diameter of the hoisting machinery, encoder type of the hoisting machinery, nominal motor torque, nominal motor current and voltage, motor resistance, motor reactance, motor pole count, nominal frequency of the motor, voltage and current of the holding brakes, etc.

The configuration of the elevator drive comprises specifying a number of parameters to be stored in a memory associated with the elevator drive. Some of the parameters are associated with properties of the elevator electrical motor such as nominal torque, nominal current, source voltage, input frequency and acceleration current, whereas some of the parameters are associated with the elevator generally such as roping ratio and weights of the elevator car and the counterweight. Among the parameters associated with the motor are also parameters related to integral parts of the motor such as traction sheave and brakes. Regarding the traction sheave it is important to know the diameter of the traction sheave so that supplying frequency of the motor and torque to be applied to the ropes by the motor may be determined. Regarding the brakes it is important to know the current and voltage to be supplied to the brakes to keep the brakes open and the time it takes to apply the brakes.

Nowadays the configuration of an elevator drive is performed using a user interface that is communicatively connected to an elevator drive unit. The user interface allows the manual entry of each separate parameter. The parameters may be superficially checked for range errors while entry by the user interface, but there is no actual automatic checking regarding the elevator machinery actually installed. The parameters to be entered are read by the person performing the installation from such sources as the nameplate of the electrical motor.

The configuring of the elevator drive is a process that requires precision and takes time. Configuration errors may cause unexpected behaviour to the elevator when the elevator is tested following the configuration. Configuration may take, for example, one whole day for a person performing the installation.

In addition to these manual configuration solutions of the prior art, there are also solutions utilizing an electronic memory component which has parameter values of elevator components and which is arranged in connection with the elevator. These parameter values can be read from the electronic memory component and stored to the elevator component. Solutions relating to this kind of systems are described in e.g. EP2923986A1- and WO2018060542A1-publications.

These kind of solutions require complex and specific design from the equipment. For example in EP2923986A1 a data cable connection must be arranged between the memory component and an elevator drive unit to read the hoisting machinery parameters. In other words, use of these solutions is limited to selected elevator products only. Also, these solutions may not always very well tolerate harsh conditions during manufacturing, transportation and installation of elevator systems.

One further prior art solution is presented in WO2017220678A1 which relates to a method for configuring an elevator control system. The method of WO2017220678 comprises scanning, with a mobile device, a computer-readable graphical code provided on a network device of the elevator control system, determining a unique identifier for the network device by evaluating the computer-readable code, inputting configuration data for the network device into the mobile device, sending the unique identifier and the configuration data for the network device to a central controller of the elevator control system, and configuring, based on the configuration data, the network device with the central controller via a fixedly installed communication network interconnecting the network device and the central controller.

Still another prior art solution is described in EP2602929A1, which relates to a system for commissioning an electrical drive of e.g. a mobile working machine comprises a memory device attached to or otherwise associated with an electrical machine of the electrical drive and data transfer equipment (for reading parameter data from the memory device and for loading the parameter data to an electronic power converter of the electrical drive. The data transfer equipment can be based on the RFID-technology. The parameter data expresses one or more inductances which are specific to the electrical machine as an individual electrical machine.

### SUMMARY

An object of the invention is to present a method of commissioning a conveyor system, such as an elevator system, an escalator system and/or a moving walk system.

The invention relates to a method for commissioning a conveyor system, wherein the method comprises: providing an optically readable code containing one or more parameters of a conveyor component and/or a link to one or more parameters of a conveyor component, and attaching and/or printing said code to said conveyor component, reading data of the optically readable code with a reader device, transferring the data read from the optically readable code and/or downloaded from a link of the optically readable code to a control unit controlling the conveyor component and/or conveyor system via wireless or wired communication interface, and receiving the data by the control unit and storing the parameters to the memory of the control unit.

In one embodiment of the invention the method further comprises using the stored data as a parameter value during operation of the conveyor component. In one embodiment of the invention the method further comprises checking received data and using parameters only if the received values are accepted.

Objective of the present invention is to provide a generally applicable solution for storing parameters in different kind of conveyor systems. The benefits of the invention are related to easier, faster and more error proof conveyor drive configuration and installation. The solution of the invention also tolerates harsh conditions during manufacturing, transportation and installation of elevator systems better than the electronic prior art solutions. Thus, improved reliability is one advantage of the present invention. The solution of the invention can be used e.g. in commissioning a conveyor device so that correct parameters can be set easily into the system. This is useful for example in a case where a control unit of a conveyor system has to be replaced and parameters have to be set again for the new control unit or part of the control unit.

The expression "a number of" refers herein to any positive integer starting from one, e.g. to one, two, or three.

The expression "a plurality of" refers herein to any positive integer starting from two, e.g. to two, three, or four.

Various exemplifying and non-limiting embodiments of the invention to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features.

Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings, in which:
- Fig. 1: illustrates an elevator which can be used in the method of the invention, and
- Fig. 2: presents a flow chart illustrating a method according to one embodiment of the invention.

### DESCRIPTION OF THE EXEMPLIFYING EMBODIMENTS

The specific examples provided in the description given below should not be construed as limiting the scope and/or the applicability of the appended claims. Lists and groups of examples provided in the description given below are not exhaustive unless otherwise explicitly stated.

In the following an optically readable code which is arranged in connection to a component of a conveyor system, such as an elevator system, escalator system and/or moving walk system, is presented which comprises information of components of the conveyor system. Examples of such components are driving machinery, hoisting machinery, suspension elements, drive belts, ropes, buffers, sprocket wheels, drive chains, moving steps and/or pallets. Ropes may be, for example hoisting ropes or overspeed governor ropes. The components mentioned above are just examples and the optically readable code disclosed can be used also with other components.

The optically readable code can store data relating to at least one parameter of a component of the conveyor system and/or a link to at least one parameter of a component of the conveyor system. The data can be read by using an optical reader device, e.g. a mobile optical reader device. The optical reader device can be a comprising a camera, e.g. portable device like a smartphone, and/or a scanner. The optically readable code can be a bar code, e.g. a linear or onedimensional (1D) bar code and/or two-dimensional (2D) bar code, such as a QRcode. The optically readable code may be attached to a component of the conveyor system in a manner that the maintenance person can read the contents by using an optical reader device. In one not claimed embodiment of the invention the optically readable code is arranged in connection with a name plate of the component. The reader device may send the read data and/or downloaded data further to controller of the component, controller of the conveyor system, a database, server and/or cloud service or similar.

The information stored in the optically readable code and/or to a location the link indicates, e.g. database and/or server, may include one or more of the following: mechanical and electrical parameters of the conveyor component, parameters of the drive machinery of elevator, escalator and/or moving walk, properties of the elevator motor, suspension ratio of the elevator car, traction sheave diameter of the hoisting machinery, encoder type of the hoisting machinery, nominal motor torque, nominal motor current and voltage, motor resistance, motor reactance, motor pole count, nominal frequency of the motor, voltage and current of the brakes, e.g. holding brakes, acceleration current, roping ratio, weights of the elevator car and the counterweight, reset code for a counter, material number, serial number, date of manufacturing, factory identification, performance parameters of the component, life time parameters, type examination certificate, declaration of conformity or similar. The optically readable code can comprise information related to one or more components of a conveyor system.

Reference will now be made in detail to the embodiments of the present invention, examples of which are illustrated in the accompanying drawings.

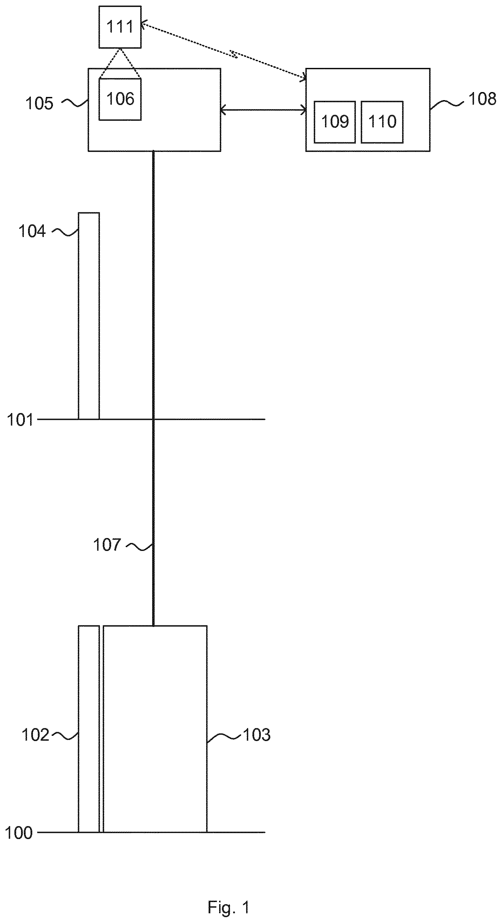

In figure 1 a block diagram of a non claimed embodiment of an elevator comprising at least one component with an optically readable code is presented. In figure 1 an elevator car 103 disclosed. The elevator car 103 can stop in a first floor 100 and a second floor 101. The floors may be any floor in a building and not necessarily the first and second floor of the building. The first floor 100 may be, for example, garage and the second floor 101 the ground level. A landing door 102 of the first floor is arranged in front of the elevator car 103. In figure 1 a similar arrangement can be seen at the second floor 101 where a landing door 104 of the second floor is arranged. In figure 1 rope 107 is a hoisting rope and used for operating the elevator. This arrangement is, however, only an example.

In the non claimed embodiment of figure 1 an optically readable code 106 is arranged in connection to the hoisting arrangement 105. The optically readable code can also be arranged e.g. into an elevator car in such a way that it can be easy to read by a maintenance person and optionally so that it cannot be accessed by the public.

An optical reader device 111 is able to read information of the optically readable code. The reader device can be e.g. a scanner or a device comprising a camera such as a portable phone. When the reader device 111 reads the information of the optically readable code 106, it can transfer the information, e.g. parameters, to control device 108 of the conveyor system. The connection between the reader 111 and controller 108 may be any known data communication connection, such as a wireless or wired connection. Controller 108 receives the contents of the information of the optically readable code. The transmission received at the controller 108 can be processed by at least one processor 109 and stored into at least one memory 110. The at least one memory 110 can comprise a database or similar that can be accessed in one embodiment also by other devices. Correspondingly, at least one memory 110 may be completely or in part outside the controller 108 and the controller only accesses the memory 110 that is located in a different location, such as a server or cloud service.

In one embodiment of the invention optically readable code 106 comprises a link, such as a URL, to at least one parameter of the conveyor component and the reader device 111 can download parameter values from a location, e.g. a server, specified in the link. In one embodiment of the invention the optically readable code comprises parameters of a conveyor component and a link, such as a URL, to parameters of the conveyor component.

In one embodiment of the invention, the optically readable code can comprise security features. The purpose of the security features is e.g. to prevent of reading the data, e.g. true parameter values, from the unauthorized parties. Security features can be implemented e.g. by encrypting the data in the optically readable code. In this case only authorized reader devices and/or receiving components, such as control unit, can decrypt the data.

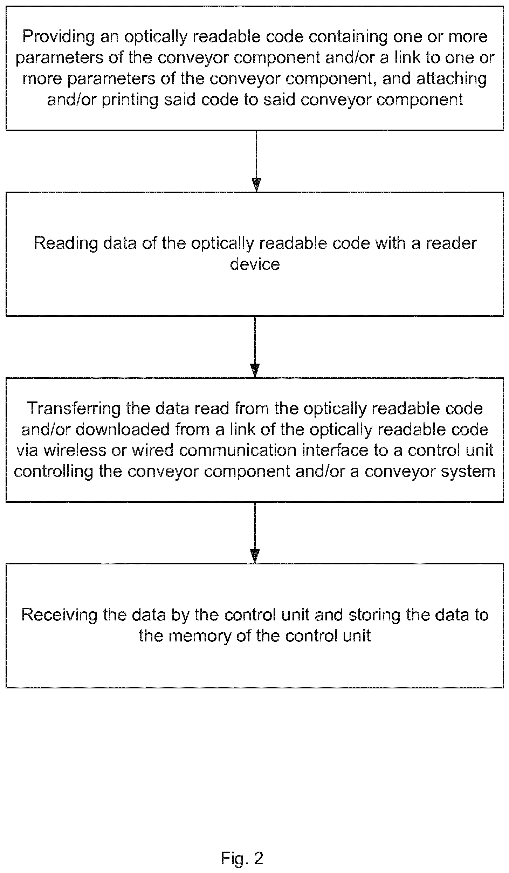

In figure 2 a method according to an example embodiment is disclosed. The method is initiated by providing an optically readable code containing one or more parameters of conveyor component, e.g. an elevator component, and attaching or printing said code to said component. The correct parameter values can be defined e.g. at the manufacturing phase for example during testing of the component.

Said component is installed to conveyor system, e.g. an elevator system. The optically readable code of the component is read using a reader for reading the content of an optically readable code. In the example of figure 2 the reader is configured to read one code at time. Typically the reading process takes only short time. The reader is connected to a transmitter using wired or wireless connection. The transmitter then transmits the read content if it comprises parameter values. If it the content of the optically readable code contains a link, such as a URL, the information comprising parameter values can be first downloaded via the link, and then transmitted. The transmission may be done by using a wireless or wired transmitter. The transmitter may be an independent transmitter using mobile communication networks, Wi-Fi or similar. However, it is also possible to use the transmission channels that are dedicated particularly for that elevator car. The transmission may be encrypted.

The transmission is received at a controller. The transmission needs not to be a direct transmission but may involve any number of network elements in between. Thus, using an ordinary wireless internet connection is acceptable provided that the controller is able to receive the transmission.

The relevant information is then extracted from the transmission. After extracting the information, the extracted information can be analyzed and compared with corresponding information e.g. in the controller database. For example, it is possible to compare if the content of the tag is what it is supposed to be. For example, each of the optically readable codes may have a serial number which is associated with the conveyor component. If the serial number does not match with assumed conveyor component there may be a mistake or fraud.

One exemplary embodiment of the present invention can be implemented in the following way in the elevator environment. In this embodiment elevator hoisting machineries are tested in the factory before shipped to the elevator site. When tested, parameters of the hoisting machinery are printed as an optically readable code, such as a 2D barcode, e.g. OR code, or barcode, which is then printed or attached to the name plate of the hoisting machinery. Afterwards, on elevator site, said code is read from the name plate with a mobile reader, e.g. an optical reader, a camera of a mobile device, and then inputted to an elevator controller or a drive unit through a wireless or wired communication interface. Thus there is no need for inputting the parameters manually, and correct parameters are always available for elevator control. It's also possible to save the parameters to a server and/or database and provide a link, such as a URL, in the optically readable code. In this case the parameters can be downloaded from a server and/or database based on the link and then after downloading the parameter values can be inputted to an elevator controller or a drive unit through a wireless or wired communication interface. In one embodiment of the invention, a command can be sent to the conveyor system and/or conveyor component that it should download parameter values from the location, such as a URL, read from the optically readable code.

As stated above, the components or other parts of the exemplary embodiments can include computer readable medium or memories for holding instructions programmed according to the teachings of the present embodiments and for holding data structures, tables, records, and/or other data described herein. Computer readable medium can include any suitable medium that participates in providing instructions to a processor for execution. Common forms of computer-readable media can include, for example, a floppy disk, a flexible disk, hard disk, magnetic tape, any other suitable magnetic medium, a CD-ROM, CD±R, CD±RW, DVD, DVD-RAM, DVD1 RW, DVD±R, HD DVD, HD DVD-R, HD DVD-RW, HD DVD- RAM, Blu-ray Disc, any other suitable optical medium, a RAM, a PROM, an EPROM, a FLASH-EPROM, any other suitable memory chip or cartridge or any other suitable medium from which a computer can read.

The specific examples provided in the description given above should not be construed as limiting the applicability and/or the interpretation of the appended claims. Lists and groups of examples provided in the description given above are not exhaustive unless otherwise explicitly stated.

## Claims

1. A method for commissioning a conveyor system, wherein the method comprises:
- providing an optically readable code (106) containing one or more parameters of a conveyor component and/or a link, such as a URL, to one or more parameters of the conveyor component, and attaching and/or printing said code to said conveyor component,
- reading data of the optically readable code with a reader device (111),
- transferring the data read from the optically readable code and/or downloaded from the link of the optically readable code to a control unit (108) controlling the conveyor component and/or conveyor system via a wireless or wired communication interface, and
- receiving the data by the control unit (108) and storing the parameters to a memory (110) of the control unit.

2. A method of claim 1, wherein the method further comprises using the stored data as at least one parameter value during operation of the conveyor component.

3. A method of claim 1 or 2, wherein the method further comprises checking the received data and using the parameters only if the received values are accepted.

4. A method of any preceding claim 1 - 3, wherein the data is encrypted, and reader and/or controller decrypts the data.

## Patentansprüche

1. Verfahren zur Inbetriebnahme eines Fördersystems, wobei das Verfahren Folgendes umfasst:
- Bereitstellen eines optisch lesbaren Codes (106), der einen oder mehrere Parameter einer Förderkomponente und/oder einen Link, wie etwa eine URL, zu einem oder mehreren Parametern der Förderkomponente enthält, und Anbringen und/oder Aufdrucken des Codes an der Förderkomponente,
- Lesen von Daten des optisch lesbaren Codes mit einem Lesegerät (111),
- Übertragen der aus dem optisch lesbaren Code gelesenen und/oder von dem Link des optisch lesbaren Codes heruntergeladenen Daten zu einer Steuereinheit (108), die die Förderkomponente und/oder das Fördersystem steuert, über eine drahtlose oder drahtgebundene Kommunikationsschnittstelle und
- Empfangen der Daten durch die Steuereinheit (108) und Speichern der Parameter in einem Speicher (110) der Steuereinheit.

2. Verfahren nach Anspruch 1, wobei das Verfahren ferner Verwenden der gespeicherten Daten als mindestens einen Parameterwert während des Betriebs der Förderkomponente umfasst.

3. Verfahren nach Anspruch 1 oder 2, wobei das Verfahren ferner Prüfen der empfangenen Daten und Verwenden der Parameter nur dann, wenn die empfangenen Werte akzeptiert werden, umfasst.

4. Verfahren nach einem der Ansprüche 1-3, wobei die Daten verschlüsselt sind und das Lesegerät und/oder die Steuerung die Daten entschlüsselt.

## Revendications

1. Procédé de mise en service d'un système de convoyeur, le procédé comprenant :
- la fourniture d'un code optiquement lisible (106) contenant un ou plusieurs paramètres d'un composant de convoyeur et/ou un lien, tel qu'une URL, vers un ou plusieurs paramètres du composant de convoyeur, et la fixation et/ou l'impression dudit code sur ledit composant de convoyeur,
- la lecture de données du code optiquement lisible à l'aide d'un lecteur (111),
- le transfert des données lues à partir du code optiquement lisible et/ou téléchargées à partir du lien du code optiquement lisible vers une unité de commande (108) qui commande le composant de convoyeur et/ou le système de convoyeur par l'intermédiaire d'une interface de communication sans fil ou filaire, et
- la réception des données par l'unité de commande (108) et le stockage des paramètres dans une mémoire (110) de l'unité de commande.

2. Procédé selon la revendication 1, le procédé comprenant en outre l'utilisation des données stockées comme au moins une valeur de paramètre durant le fonctionnement du composant de convoyeur.

3. Procédé selon la revendication 1 ou 2, le procédé comprenant en outre la vérification des données reçues et l'utilisation des paramètres uniquement si les valeurs reçues sont acceptées.

4. Procédé selon l'une quelconque des revendications précédentes 1 à 3, dans lequel les données sont cryptées et le lecteur et/ou le contrôleur décrypte les données.
